Europäisches Patentamt

**European Patent Office**  (11) Numéro de publication: **0 056 541**
**B1**

Office européen des brevets

(12) # FASCICULE DE BREVET EUROPEEN

(45) Date de publication du fascicule du brevet:
06.06.84

(51) Int. Cl.³: **B 29 C 17/10** // G02B5/16

(21) Numéro de dépôt: **81401968.3**

(22) Date de dépôt: **09.12.81**

(54) **Dispositif de support d'un outil d'usinage d'une tige cylindrique et tête d'usinage comportant un tel dispositif.**

(30) Priorité: **31.12.80 FR 8027888**

(43) Date de publication de la demande:
**28.07.82 Bulletin 82/30**

(45) Mention de la délivrance du brevet:
**06.06.84 Bulletin 84/23**

(84) Etats contractants designés:
**BE CH DE GB IT LI**

(56) Documents cités:
**DE - A - 2 507 951**
**FR - A - 1 476 393**
**FR - A - 2 413 962**
**FR - A - 2 428 513**

(73) Titulaire: **LIGNES TELEGRAPHIQUES ET**
**TELEPHONIQUES L.T.T., 1, rue Charles Bourseul,**
**F-78702 Conflans-Ste-Honorine (FR)**

(72) Inventeur: **Hulin, Jean-Pierre, THOMSON-CSF**
**SCPI 173, bld Haussmann, F-75360 Paris Cedex 08 (FR)**
Inventeur: **Dubois, Gilles, THOMSON-CSF SCPI 173, bld**
**Haussmann, F-75360 Paris Cedex 08 (FR)**
Inventeur: **Paumier, Marcel, THOMSON-CSF**
**SCPI 173, bld Haussmann, F-75360 Paris Cedex 08 (FR)**

(74) Mandataire: **Benoit, Monique et al, THOMSON-CSF**
**SCPI 173, Bld Haussmann, F-75379 Paris Cedex 08 (FR)**

## Description

La présente invention se rapporte au domaine de l'usinage en continu de rainures, généralement longitudinales, sur une tige cylindrique, et elle a plus particulièrement pour objet un dispositif destiné à porter l'outil d'usinage.

On entend ici par tige tout élément cylindrique allongé, composite ou non, quelles que soient ses dimensions, son ou ses matériaux constitutifs.

Dans certaines applications, il est nécessaire que l'usinage de rainures sur une tige cylindrique soit très précis, comme c'est notamment le cas lorsque la tige cylindrique est destinée à constituer un support pour des fibres optiques, qui sont alors placées dans les rainures. En effet, une telle tige, souvent appelée jonc, est généralement composite, très longue et de petit diamètre (de l'ordre du millimètre ou du centimètre), et il est intéressant économiquement de pouvoir y usiner un maximum de rainures dont les dimensions sont très petites. Par ailleurs, dans le cas d'une application aux fibres optiques, dont il est connu qu'elles sont très vulnérables aux microcontraintes qui se traduisent en général par une atténuation du signal, il est nécessaire que les dimensions des rainures soient très régulières. Enfin, dans toutes les applications, il est souhaitable de travailler à la vitesse de fabrication maximale.

Il est connu de la demande de brevet français 2 413 962 et de son addition 2 428 513, de réaliser un usinage en continu de rainures sur une tige cylindrique mince, de structure composite comportant une âme rigide entourée d'une gaine de plastique lisse; les rainures sont parallèles à l'axe de la tige ou en hélice à pas simple ou alterné, de pas généralement assez grand devant le diamètre de la tige. Selon ces demandes de brevet, il est réalisé, entre deux guidages de la tige, un usinage des rainures à l'aide d'une tête d'usinage, qui comporte une partie chauffant la tige et porte un outil de coupe posé directement dans un évidement pratiqué dans la tête, la tige passant au centre de l'outil et de la tête; dans le cas de rainures hélicoïdales, la tête est animée d'un mouvement de rotation relatif par rapport à la tige. Ce mode de réalisation a l'avantage d'être simple mais présente différents inconvénients, parmi lesquels le relatif manque de précision dans le positionnement de l'outil, et le fait que l'outil se trouve porté à une température qui n'est pas forcément très uniforme.

La présente invention a pour objet un perfectionnement d'une tête d'usinage de ce type, visant à augmenter la précision de l'usinage par l'interposition, entre la tête et l'outil de coupe, d'un dispositif porte-outil qui permet notamment un positionnement plus précis de l'outil, une plus grande uniformité de la température de ce dernier, et une maintenance plus aisée que dans les dispositifs connus.

Plus précisément, l'invention a pour objet un dispositif de support d'un outil d'usinage du type selon le préambule de la revendication 1 et le caractérisé par le fait qu'il comporte une pièce support de forme générale conique, comportant une ouverture la traversant et un premier logement destiné à recevoir l'outil, cette pièce support étant destinée à être placée dans un deuxième logement ménagé dans la tête d'usinage, de forme générale conique, de même pente que le cône formant la pièce support, de sorte que l'ouverture de la tête et l'ouverture de la pièce-support soient alignées.

D'autres objets particularités et résultats de l'invention ressortiront de la description suivante, donnée à titre d'exemple non limitatif et illustrée par les dessins annexés, qui représentent:

— la fig. 1, un schéma synoptique d'un système d'usinage d'une tige cylindrique;
— la fig. 2, vu en perspective éclatée, un mode de réalisation du dispositif de support d'un outil d'usinage selon l'invention.

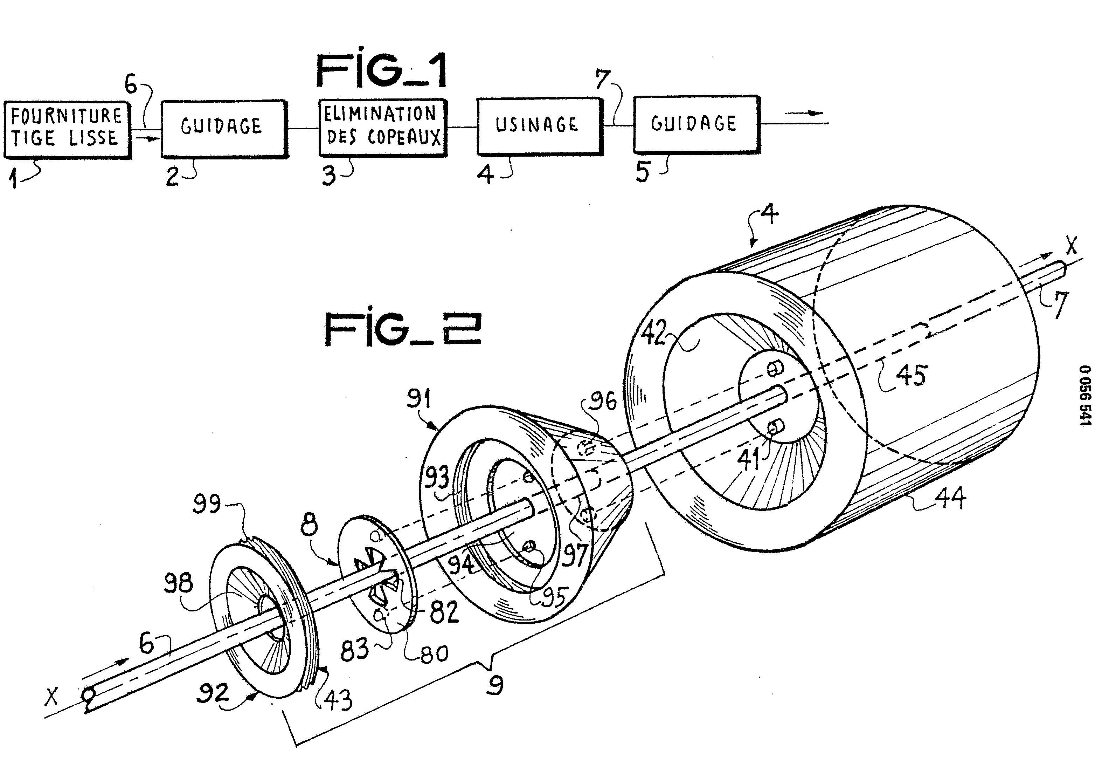

Sur la fig. 1, on a donc représenté schématiquement les différentes unités nécessaires à l'usinage d'une tige cylindrique, tel par exemple qu'il est décrit dans la demande de brevet français et son addition précitées.

Ce système comporte tout d'abord une unité 1 assurant la fourniture d'une tige lisse 6, constituée par exemple par une âme rigide recouverte par extrusion d'une gaine lisse en matière isolante. Cette unité peut être par exemple réalisée par une bobine débitrice tournant sur un axe normal à celui du déplacement de la tige.

La tige 6 ainsi fournie passe ensuite dans unité de guidage 2, ayant pour fonction de guider la tige selon un axe défini en limitant ses mouvements dans les deux autres dimensions et, éventuellement, d'assurer son entraînement à une vitesse également prédéfinie. Cette fonction d'entraînement peut, dans une variante de réalisation, être réalisée par une unité distincte (non représentée). De plus, il est préférable que la vitesse d'entraînement soit asservie, de toute façon connue, afin d'obtenir une meilleure précision dans l'usinage, surtout dans le cas où les rainures à réaliser sont hélicoïdales.

Le système comporte ensuite une unité d'usinage 4, décrite plus en détails fig. 2, qui comporte principalement une tête d'usinage, chauffée, avec éventuellement un dispositif (non représenté) d'asservissement de la température, et, dans le cas de rainures à usiner hélicoïdalement, animée d'un mouvement de rotation par rapport à la tige 6, par tous moyens connus, non représentés, ce mouvement étant de préférence asservi à la vitesse de défilement de la tige.

A la sortie de l'unité d'usinage 4, la tige rainurée, portant la référence 7, est à nouveau maintenue par une unité de guidage 5, avantageusement analogue à l'unité 2.

La tige peut ultérieurement être stockée sur ne réceptrice ou directement utilisée; par exemple pour les supports de fibres optiques, le système de pose des fibres dans les rainures peut succéder directement à l'unité de guidage 5.

Le système comporte en outre, dans un mode de réalisation préféré, un dispositif 3 d'élimination des copeaux d'usinage, situé en amont de l'unité 4 et réalisé par exemple comme décrit dans les demandes de brevet précitées.

La fig. 2 représente un mode de réalisation du dispositif selon l'invention.

La tête d'usinage, globalement repérée 4, comporte un corps chauffant 44, par exemple de forme généralement cylindrique, d'axe XX, métallique et traversé de part en part par une ouverture 45, par exemple selon XX, permettant le passage de la tige cylindrique. Le cylindre 44 comporte sur sa face amont, prise dans le sens de défilement de la tige 6, un logement 42, de forme généralement tronconique, ayant même axe XX, destiné à recevoir un porte-outil 9.

Le porte-outil 9 se compose d'une pièce support 91, destinée à recevoir un outil de coupe 8, et d'une bague de serrage 92 venant fixer cet outil.

Le support 91 est de forme extérieure tronconique, de même pente que celle du logement 42, et comporte à l'intérieur un premier épaulement 93, destiné à recevoir la bague 92, puis un second épaulement formant un logement 94 au fond du support, destiné à recevoir l'outil de coupe 8. Le support 91 est de la même manière, pour permettre le passage de la tige 6, percé d'une ouverture 97, sensiblement d'axe XX. Il est en outre prévu au moins un et de préférence quatre picots de positionnement 41 faisant saillie dans le logement 42, coopérant avec des trous borgnes 96 ménagés dans le support 91; afin de clarifier la figure, deux picots 41 et deux trous 96 seulement sont représentés.

L'outil de coupe 8 est par exemple constitué par un disque mince 80, percé dans sa zone centrale d'une ouverture 82 admettant l'axe (XX) de déplacement de la tige comme axe de symétrie, et dont la forme définit le profil de la tige 7 après usinage. L'outil 8 comporte encore au moins une et de préférence deux ouvertures 83 coopérant avec deux picots de positionnement 95 du support 91.

L'outil 8 est maintenu dans le logement 94 par la bague 92 par tout moyen, par exemple comme représenté sur la figure par un filetage pratiqué à sa périphérie (99), correspondant à un filetage réalisé dans l'épaulement 93; une des faces (43) de la bague 92, celle qui maintient l'outil 8, est plane; l'autre face (98) de cette bague est au moins partiellement tronconique, de façon à faciliter d'une part le guidage de la tige 6 dans l'ouverture 82 de l'outil 8, et d'autre part, l'élimination des copeaux résultant de la découpe réalisée par l'outil 8: leur élimination est d'autant plus facile qu'ils restent entiers, ni trop chauffés ni cassés.

Les différentes pièces (91 et 92) constituant le porte-outil 9 et l'outil 8 lui-même, devant être des pièces de précision, sont avantageusement réalisés en métal selon une méthode de découpe de précision, par exemple par électro-érosion.

Lors de la mise en place de l'outil, on place celui-ci dans le logement 94 à l'aide des picots de positionnement 95 et des ouvertures 83 leur correspondant, l'outil étant de préférence entré à force; on procède ensuite à la fixation de l'outil par la bague de serrage 92 vissée dans le support 91. On place ensuite l'ensemble porte-outil 9 et outil 8 dans le logement 42 de la tête 4, le positionnement étant réalisé par la coopération des picots 41 et des logements 96. Lors de l'usinage, le porte-outil et son outil sont maintenus en place par le défilement de la tige, sans autre fixation; lorsque l'usinage est interrompu, un étrier (non décrit) vient maintenir l'ensemble.

En fonctionnement, la tige 6 est animée d'un mouvement de translation le long de l'axe XX; dans le cas où les rainures à usiner sont hélicoïdales, la tête 4 est animée d'un mouvement de rotation par rapport à son axe XX, soit alternatif soit continu selon que l'hélice est ou non à pas alterné; l'outil 8 découpe la tige 6 selon le profil donné par l'ouverture 82: dans l'exemple de la figure, elle lui imprime quatre rainures.

Un tel porte-outil permet donc de faciliter la mise en place et le démontage de l'outil 8, par exemple pour son nettoyage ou son remplacement; il permet également d'améliorer le contact thermique entre l'outil de coupe 8 et le corps chauffant 44, ce qui conduit à une température plus homogène pour l'outil; il permet en outre de faciliter le dégagement des copeaux; enfin, il permet une amélioration de la précision dans le positionnement de l'outil, cela étant dû notamment au positionnement par surface conique, plus précis que la simple mise en place d'un outil dans un logement tel que le logement 94, mais pratiqué directement dans la tête d'usinage 4.

A titre d'exemple, il a été obtenu une précision dans le centrage de l'ordre du centième de millimètre pour l'usinage de dix rainures ou plus dans une tige d'environ 4 mm de diamètre.

**Revendications**

1. Dispositif de support d'un outil d'usinage (8) de rainure en continue d'une tige cylindrique (6) dont la surface extérieure est en matériau plastique ou en matériau de durté voisine, dispositif destiné à être placé dans une tête d'usinage (4) comportant une ouverture (45) la traversant, permettant le passage de la tige, ce dispositif étant caractérisé par le fait qu'il comporte une pièce support (91) de forme générale conique, comportant une ouverture (97) la traversant et un premier logement (94) destiné à recevoir l'outil (8), cette pièce support (91) étant destinée à être placée dans un deuxième logement (42) ménagé dans la tête d'usinage (4), de forme générale conique, de même pente que le cône formant la pièce support (91), de sorte que l'ouverture (45) de la tête (4) et l'ouverture (97) de la pièces-support (91) soient alignées sur un même axe (XX).

2. Dispositif selon la revendication 1, caractérisé par le fait qu'il comporte en outre une bague de serrage (92), venant se fixer sur la pièce support (91) de façon à serrer l'outil (8) dans le premier logement (94).

3. Dispositif selon la revendication 2, caractérisé par le fait que la bague de serrage (92) admet ledit axe (XX) pour axe de symétrie, qu'elle est percée d'une ouverture selon cet axe, et que celle de ses faces (98) qui est opposée à l'outil (8) est au moins partiellement tronconique.

4. Dispositif selon la revendication 2, caractérisé par le fait que la pièce support (91) comporte, entre la base du cône et le premier logement (94), un épaulement (93) fileté formant un troisième logement pur la bague de serrage (92), dont la périphérie (99) est filetée de façon correspondante.

5. Dispositif selon la revendication 1, caractérisé par le fait que le premier logement (94) est traversé par l'ouverture (97) de la pièce-support (91).

6. Dispositif selon l'une des revendications précédentes, caractérisé par le fait que le premier logement (94) comporte des moyens de positionnement (95) de l'outil (8).

7. Dispositif selon l'une des revendications précédentes, caractérisé par le fait que la pièce support (91) comporte des moyens de positionnement (96) coopérant avec des moyens de positionnement (41) du deuxième logement (42).

8. Dispositif selon la revendication 7, caractérisé par le fait que la pièce support (91) est tronconique et que ses moyens de positionnement comportent des trous borgnes (96) portés par la petite face du tronc de cône, le deuxième logement (42) étant également tronconique, sa petite face portant des picots de positionnement (41) coopérant avec les trous borgnes (96).

9. Tête d'usinage comportant un corps chauffant dans lequel sont réalisés une ouverture (45) le traversant et un logement (42), caractérisé par le fait qu'elle comporte en outre un dispositif de support selon l'une des revendications précédentes placé dans le logement (42) précédent, et un outil de coupe (8) placé dans la pièce support (91) du dispositif de support.

## Patentansprüche

1. Tragevorrichtung für ein Werkzeug zur Bearbeitung eines zylindrischen Stabs, wobei das Werkzeug in einem Bearbeitungskopf angebracht werden soll, durch den der Stab hindurchgesteckt werden kann, dadurch gekennzeichnet, daß die Vorrichtung ein im wesentlichen konisches Trageteil (91) aufweist, das von einer Öffnung (97) durchzogen wird und ein erstes Lager (94) zur Aufnahme des Werkzeugs (8) besitzt und das geeignet ist, in einem zweiten, im wesentlichen konischen Lager (42) untergebracht zu werden, das sich im Bearbeitungskopf (4) befindet, wobei die Konusneigung dieses Lagers der des Trageteils (91) gleicht und die Öffnung (45) im Kopf und die Öffnung (97) des Trageteils auf einer gemeinsamen Achse (XX) fluchten.

2. Vorrichtung nach Anspruch 1, dadurch gekennzeichnet, daß sie außerdem einen Spannring (92) aufweist, der sich auf dem Trageteil (91) derart befestigen läßt, daß das Werkzeug (8) im ersten Lager (94) eingespannt wird.

3. Vorrichtung nach Anspruch 2, dadurch gekennzeichnet, daß der Spannring (92) die Achse (XX) als Symmetrieachse annimmt, daß er von einer Öffnung entlang dieser Achse durchzogen ist und daß diejenige seiner Oberflächen (98), die dem Werkzeug (8) entgegengesetzt ist, zumindest teilweise die Form eines Kegelstumpfes aufweist.

4. Vorrichtung nach Anspruch 2, dadurch gekennzeichnet, daß das Trageteil (91) zwischen der Basis des Konus und dem ersten Lager (94) eine mit Gewinde versehene Schulter (93) aufweist, die ein drittes Lager für den Spannring (92) bildet, wobei dessen Umfang (99) mit einem entsprechenden Gewinde versehen ist.

5. Vorrichtung nach Anspruch 1, dadurch gekennzeichnet, daß die Öffnung (97) des Trageteils (91) das erste Lager (94) durchdringt.

6. Vorrichtung nach einem der vorhergehenden Ansprüche, dadurch gekennzeichnet, daß das erste Lager (94) Mittel (95) zur Positionierung des Werkzeugs (8) aufweist.

7. Vorrichtung nach einem der vorhergehenden Ansprüche, dadurch gekennzeichnet, daß das Trageteil (91) Positioniermittel (96) aufweist, die mit den Positioniermitteln (41) des zweiten Lagers (42) zusammenwirken.

8. Vorrichtung nach Anspruch 7, dadurch gekennzeichnet, daß das Trageteil (91) kegelstumpfförmig ausgebildet ist und daß seine Positioniermittel Sacklöcher (96) auf der kleinen Stirnseite des Kegelstumpfes enthalten, während das zweite Lager (42) ebenfalls kegelstumpfförmig ausgebildet ist und auf seiner kleinen Stirnseite Positionierstifte (41) trägt, die mit den Sacklöchern (96) zusammenwirken.

9. Bearbeitungskopf mit einem Heizkörper, in dem sich eine den Heizkörper durchdringende Öffnung (45) und ein Lager (42) befinden, dadurch gekennzeichnet, daß er außerdem eine Tragevorrichtung nach einem der vorhergehenden Ansprüche enthält, die in dem obigen Lager (42) untergebracht ist, sowie ein Schneidewerkzeug (8), das im Trageteil (91) der Tragevorrichtung angebracht ist.

## Claims

1. A tool supporting device for machining a cylindrical rod, this device being intended to be located in a machining head which is transversed by an opening for permitting the passage of the rod, this device being characterized by the fact that it comprises a support member (91) of generally conical shape transversed by an opening (97) and having a first recess (94) which is intended to receive the tool (8), the support member (91) being intended to be placed in a second recess (42) which is machined in the machining head (4) and has a generally conical shape of the same slope as the cone forming the support member (91) in such a way, that the opening (45) of the head and the opening (97) of the support member are aligned on one axis (XX).

2. A device according to claim 1, characterized in that it further comprises a clamping ring (92) fixed on the support member (91) for clamping the tool (8) in the first recess (94).

3. A device according to claim 2, characterized in that said axis (XX) is the symmetry axis of the clamping ring (92), that the ring is bored along this axis and that the clamping ring face (98) opposite to the tool (8) is at least partly frusto-conical.

4. A device according to claim 2, characterized in that the support member (91) comprises between the cone base and the first recess (94) a threaded shoulder (93) constituting a third recess for the clamping ring (92), the periphery (99) of said ring being correspondingly threaded.

5. A device according to claim 1, characterized in that the opening (97) of the support member (91) extends right through the first recess (94).

6. A device according to one of the preceding claims, characterized in that the first recess (94) comprises positioning means (95) for the tool (8).

7. A device according to one of the preceding claims, characterized in that the support member (91) comprises positioning means (96) which cooperate with the positioning means (41) of the second recess (42).

8. A device according to claim 7, characterized in that the support member (91) is frusto-conical and that its positioning means comprise blind-end holes (96) carried by the small face of the cone frustum, the second recess (42) being also of frusto-conical shape, the small face of said recess carrying positioning studs (41) in cooperating relation with said blind-end holes (96).

9. A machining head comprising a heating body which provides an opening (45) passing therethrough and a recess (42), characterized in that it further comprises a support device according to one of the preceding claims, located in the preceding recess (42), and a cutting tool (8) located in the support member (91) of the support device.

FIG_1

| FOURNITURE TIGE LISSE | GUIDAGE | ELIMINATION DES COPEAUX | USINAGE | GUIDAGE |

FIG_2

0 056 541